# FASCICULE DE BREVET EUROPEEN

(11) **EP 2 282 430 B1**
(45) Date de publication et mention de la délivrance du brevet: **29.05.2013**
(21) Numéro de dépôt: 10169009.7
(22) Date de dépôt: 09.07.2010
(51) Int. Cl.: H04J 14/02

(54) **Dispositif d'extraction multivoies de canaux WDM**
Vorrichtung zum Mehrwege-Abzweigen von WDM-Kanälen
Device for multipath dropping of WDM channels

(30) Priorité: 10.07.2009 FR 0903421
(43) Date de publication de la demande: 09.02.2011
(73) Titulaire: Alcatel Lucent, 75007 Paris (FR)
(72) Inventeur: Zami, Thierry, 91620, NOZAY (FR); Bertran Pardo, Oriol, 91620, NOZAY (FR); Antona, Jean-Christophe, 91620, NOZAY (FR); Bruyere, Franck, 75014 Paris (FR)
(74) Mandataire: Raets, David

(56) Documents cités:
- WO-A1-2006/114435
- US-A1- 2008 056 715
- US-A1- 2009 067 845

## Description

L'invention se rapporte aux réseaux de communications optiques à multiplexage spectral de canaux de longueurs d'ondes, appelé en anglais Wavelength Division Multiplexing (WDM). L'invention se rapporte plus particulièrement aux systèmes de détection multivoies.

US-A-2008056715 et US-A-2009067845 décrivent des noeuds de commutation optique WDM construits avec des commutateurs à sélection de longueurs d'ondes (WSS).

WO-A-2006114435 décrit un dispositif optique d'insertion-extraction conforme au préambule de la revendication 1.

On connaît des dispositifs multivoies d'insertion / extraction reconfigurables appelés « direction less » en anglais, ce qui signifie sans affectation fixe entre les récepteurs et les voies. Dans ces dispositifs multivoies, un récepteur peut recevoir des signaux optiques issus de différentes voies. Autrement dit, chaque récepteur n'est pas affecté à la réception de signaux optiques reçus sur une voie spécifique. Ces dispositifs présentent un avantage de coût puisqu'un récepteur est partagé par plusieurs voies. On connait également des dispositifs qui présentent la propriété appelée « colourless » en anglais. Cela signifie que les récepteurs peuvent recevoir des signaux optiques à différents canaux de longueurs d'ondes, ce qui procure une flexibilité au regard d'une augmentation du nombre de canaux dans le temps, au fur et à mesure du développement du réseau optique. La propriété « colourless » permet également la réalisation de réseaux flexibles en longueurs d'onde c'est-à-dire régulièrement reconfigurables en fonction des variations de charges portées par ces réseaux. Par exemple, le document « ROADM Network Design Issues », page 13, papier NMD1, NFOEC'2009, présente différents dispositifs multivoies qui présentent à la fois les propriétés d'être « directionless » et « colourless ». Dans certaines de ces structures, des démultiplexeurs accordables sont insérés entre les voies d'entrées et les récepteurs de manière à ce que tout récepteur puisse recevoir des signaux reçus sur différentes voies et à des canaux de longueurs d'onde différents.

Toutefois les dispositifs connus présentent un problème de contention de longueur d'onde. Ainsi si deux signaux au même canal de longueur d'onde sont reçus simultanément sur deux voies d'entrée, il n'est pas possible de les détecter simultanément.

Pour cela, l'invention fournit un dispositif d'extraction multivoies de canaux WDM comportant une pluralité de voies d'entrées capables de recevoir des canaux WDM, un premier coupleur d'extraction, situé sur une première voie d'entrée, un deuxième coupleur d'extraction, situé sur une deuxième voie d'entrée, une sortie d'extraction dudit premier coupleur d'extraction étant reliée à une entrée d'un premier démultiplexeur, une sortie d'extraction dudit deuxième coupleur d'extraction étant reliée à une entrée d'un deuxième démultiplexeur, une pluralité de récepteurs accordables, caractérisé par le fait qu'il comporte, un premier coupleur en étoile, possédant une pluralité d'entrées, une première entrée dudit premier coupleur en étoile étant reliée à une première sortie dudit premier démultiplexeur, et une deuxième entrée dudit premier coupleur en étoile étant reliée à une première sortie dudit deuxième démultiplexeur, un premier récepteur accordable étant relié à une première sortie dudit premier coupleur en étoile, un deuxième récepteur accordable étant relié à une deuxième sortie dudit premier coupleur en étoile, et un troisième récepteur accordable étant relié à une deuxième sortie dudit deuxième démultiplexeur.

Avantageusement, le dispositif d'extraction est tel qu' un deuxième coupleur en étoile est disposé entre lesdits démultiplexeurs et ledit troisième récepteur accordable de façon à ce que une première entrée dudit deuxième coupleur en étoile est reliée à une deuxième sortie dudit premier démultiplexeur, une deuxième entrée dudit deuxième coupleur en étoile est reliée à ladite deuxième sortie dudit deuxième démultiplexeur, et ledit troisième récepteur accordable est relié à une sortie dudit deuxième coupleur en étoile.

De préférence, le dispositif d'extraction est tel que lesdits démultiplexeurs comportent des démultiplexeurs accordables de type WSS .

Le dispositif d'extraction avantageusement est tel que les démultiplexeurs accordables de type WSS sont réglés de manière à ce que les entrées dudit premier coupleur en étoile ou de chaque coupleur en étoile ne puissent recevoir simultanément des signaux sur un même canal de longueur d'onde extraits de ladite première voie d'entrée et de la dite deuxième voie d'entrée ou d'autres voies d'entrées.

De préférence, le dispositif d'extraction utilise des coupleurs d'extraction comportant des diviseurs de puissance présentant ladite sortie d'extraction et une sortie de transfert.

Avantageusement, le dispositif d'extraction est tel que lesdits coupleurs d'extraction comportent des démultiplexeurs accordables de type WSS possédant une entrée reliée à une dite voie d'entrée, ladite sortie d'extraction et une sortie de transfert et que lesdits démultiplexeurs comportent des démultiplexeurs fixes.

De préférence, le dispositif d'extraction utilise des démultiplexeurs fixes de type démultiplexeurs périodiques ou démultiplexeurs de bandes de longueurs d'ondes.

Il est souhaitable que le dispositif d'extraction utilise des démultiplexeurs fixes agencés et reliés audit premier coupleur en étoile de manière que lesdites première et deuxième entrées dudit premier coupleur en étoile ne puissent recevoir simultanément des signaux sur un même canal de longueur d'onde extraits de ladite première voie d'entrée et de la dite deuxième voie d'entrée.

Avantageusement, le dispositif d'extraction utilise des coupleurs en étoile comportant des coupleurs passifs.

Le dispositif d'extraction optique multivoies peut aussi être tel que lesdits coupleurs en étoile comportent des coupleurs amplifiés.

De préférence, le dispositif d'extraction utilise des récepteurs accordables comportant des récepteurs cohérents.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
la figure 1 est une représentation schématique fonctionnelle d'un dispositif de commutation de signaux optique présentant une architecture de type diffusion / sélection,
la figure 2 est une représentation schématique fonctionnelle d'un dispositif de commutation de signaux optique présentant une architecture de type sélection / combinaison,
la figure 3 est une représentation schématique d'un dispositif d'extraction multivoies de canaux WDM selon un premier mode de réalisation de l'invention, pouvant notamment être utilisé dans le dispositif de commutation de la figure 1,
la figure 4 est une vue schématique d'un dispositif d'extraction multivoies de canaux WDM selon un deuxième mode de réalisation de l'invention, pouvant notamment être utilisé dans le dispositif de commutation de la figure 2,
la figure 5 est une représentation schématique de deux variantes d'un coupleur en étoile pouvant être notamment utilisé dans les dispositifs d'extraction multivoies des figures 3 et 4.

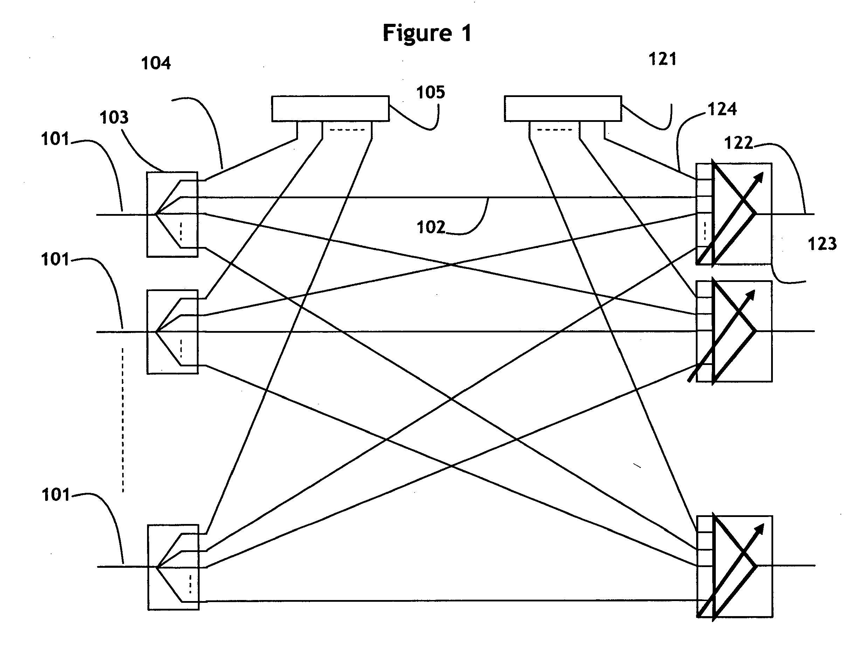

Sur la figure 1, on a représenté un dispositif de commutation de signaux optique présentant une architecture de type diffusion / sélection permettant de commuter, d'insérer et d'extraire des signaux optiques à des canaux de longueurs d'onde dans un réseau de communication optique. Ce dispositif multivoies comporte des voies entrées 101 capables de recevoir des signaux optiques à des canaux appartenant à une grille de canaux de longueurs d'onde, par exemple, des canaux d'un système de télécommunication WDM (Wavelength Division Multiplexing). Ces voies d'entrées sont reliées à des entrées de diviseurs de puissance 103 dont une sortie est reliée à une voie d'extraction 104 pour extraire des signaux sur des canaux de longueurs d'onde vers une un module d'extraction 105. D'autres sorties des diviseurs de puissance 103 sont reliées par des voies de transfert 102 à des entrées de multiplexeurs accordables 123. Les multiplexeurs accordables 123 permettent de laisser passer de manière sélective des signaux à des canaux de longueurs d'onde vers leurs sorties reliées à des voies de sortie 122. Un module d'insertion 121 permet d'insérer des signaux à des canaux de longueurs d'ondes via des voies d'insertion 124 reliées à d'autres entrées des multiplexeurs accordables 123. Ceux-ci permettent de laisser passer de manière sélective vers leurs sorties 122 correspondantes lesdits signaux insérés.

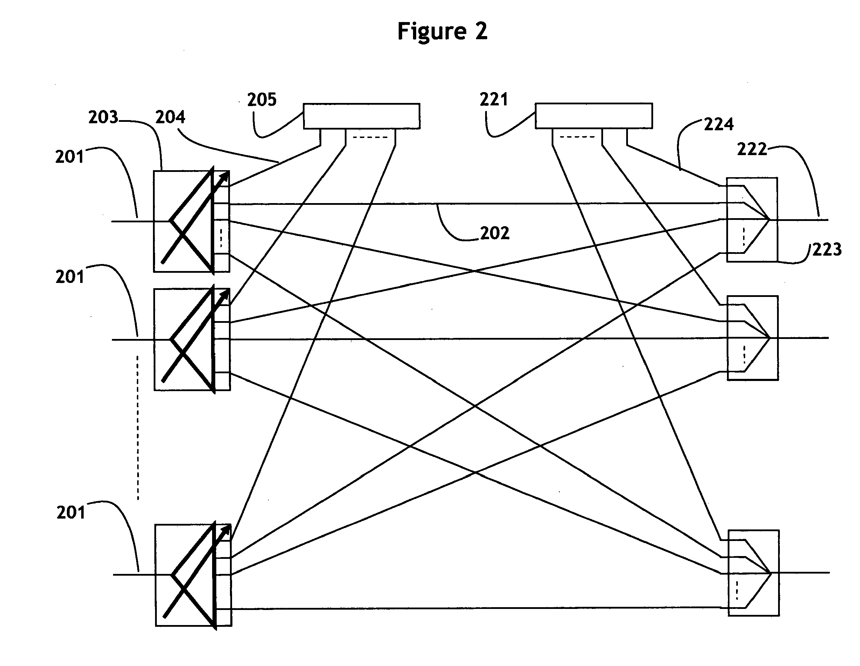

Sur la figure 2, on a représenté un autre dispositif de commutation de signaux optique permettant de commuter, d'insérer et d'extraire des signaux optiques à des canaux de longueurs d'onde dans un réseau de communication optique., Ce dispositif de commutation présente une architecture de type sélection / combinaison. Ce dispositif multivoies comporte des voies d'entrées 201 capables de recevoir des canaux de longueurs d'ondes WDM. Ces voies d'entrées sont reliées à des entrées de démultiplexeurs accordables 203 dont une sortie est reliée à une voie d'extraction 204 pour extraire de manière sélective des signaux sur des canaux de longueurs d'onde vers une un module d'extraction 205. D'autres sorties des démultiplexeurs accordables 203 sont reliées par des voies de transfert 202 à des entrées de combineurs 223, pour laisser passer des signaux à des canaux de longueurs d'onde vers leurs sorties reliées à des voies de sortie 222. Un module d'insertion 221 permet d'insérer des signaux à des canaux de longueurs d'ondes via des voies d'insertion 224 reliées à d'autres entrées des combineurs 223. Ceux-ci laissent passer vers leurs sorties 222 correspondantes lesdits signaux insérés.

Les dispositifs décrits aux figures 1 et 2 permettent de réaliser des noeuds de réseaux optiques transparents, les signaux transférés sur les voies de transfert 102, 202 traversant le noeud sans être transformé à aucun moment en signaux électriques. A l'inverse, les signaux extraits sur les voies 104, 204 subissent une conversion optique/électrique au niveau des modules d'extraction 105, 205. Réciproquement, les signaux devant être insérés sur les voies 124, 224, subissent une conversion inverse de type électrique/optique, au niveau des modules d'insertion 121, 221.

Une différence entre les dispositifs des figures 1 et 2 est la présence sur la figure 2 de démultiplexeurs accordables 203 sur les voies d'entrées 201, alors que sur la figure 1 des diviseurs de puissance 103 sont utilisés sur les voies d'entrées 101. Sur la figure 2, la possibilité qu'offre le démultiplexeur accordable 203, de sélectionner des signaux à extraire en fonction de leur canal de longueur d'onde, permet de se passer éventuellement d'une telle fonction de sélection au niveau du module d'extraction 205. Par comparaison, le module d'extraction 105 de la figure 1 requiert généralement une fonction de sélection des signaux en fonction de leur canal de longueur d'onde si cette sélection n'est pas effectuée en amont.

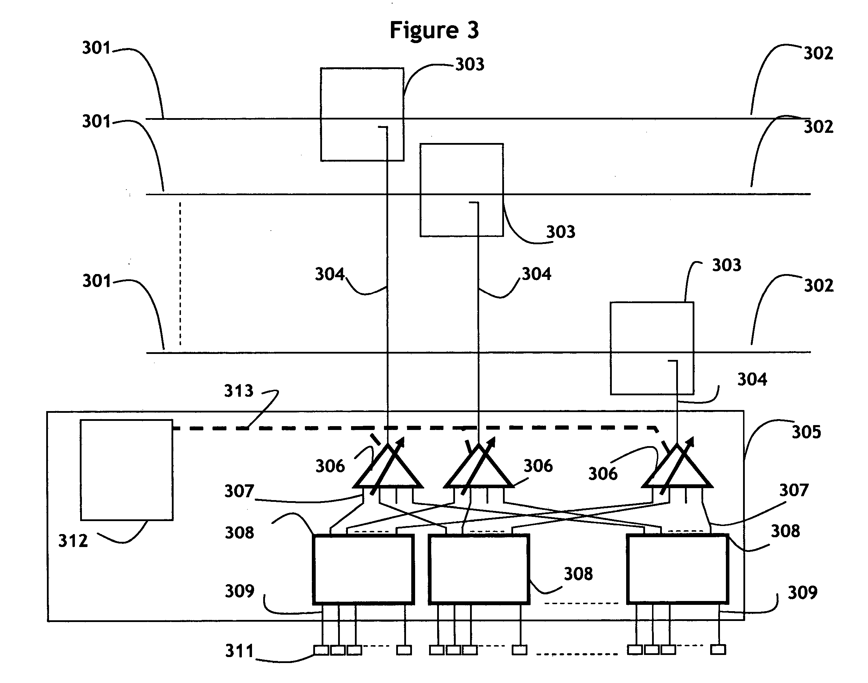

En référence à la figure 3, on va maintenant décrire un dispositif d'extraction de signaux pouvant être utilisé dans un réseau optique, notamment dans un dispositif de commutation de signaux optique présentant une architecture de type diffusion / sélection. Sur la figure 3 les éléments analogues ou identiques à ceux de la figure 1 portent le même chiffre de référence augmenté de 200.

Sur la figure 3, on a représenté schématiquement une pluralité de voies d'entrées 301, par exemple, des fibres optiques monomodes. Ces voies d'entrées sont capables de recevoir des signaux optiques à des canaux appartenant à une grille de canaux de longueurs d'onde WDM.

Les longueurs d'onde des canaux associés aux signaux que peuvent recevoir les voies d'entrées 301 sont susceptible d'évoluer au cours du temps, par exemple sous le contrôle d'un système de management du réseau WDM, non représenté sur la figure 3. Ainsi, il se peut qu'à certains moments il n'existe pas de canal commun qui soit associé à des signaux reçus sur des entrées différentes. Au contraire, à d'autres moments, il se peut que plusieurs voies d'entrées reçoivent des signaux sur un même canal. Par exemple, à un certain moment, une première voie d'entrée 301 pourra recevoir un signal sur un canal de longueur d'onde λ1, et une deuxième voie d'entrée 301 pourra recevoir un deuxième signal sur un deuxième canal de longueur d'onde λ2. A ce moment là, les signaux portés par ces deux voies d'entrées correspondront à des canaux différents. A un autre moment, il pourra apparaître sur la deuxième voie d'entrées 301 un troisième signal sur le canal de longueur d'onde λ1. A ce moment les deux voies d'entrées porteront deux signaux au même canal λ1.

Sur la figure 3 on a représenté des coupleurs de transfert et d'extraction 303 positionnés sur chacune des voies d'entrées 301. Une mise en oeuvre possible consistera à ce que les coupleurs 303 présentent une sortie reliée à une voie d'extraction 304 (par exemple, une fibre optique) et une ou plusieurs sorties de transfert reliées à des voies de transfert 302 (par exemple un ou plusieurs fibres optiques). Cette configuration sera préférée lorsque les éléments représentés sur la figure 3 seront utilisés pour réaliser à la fois l'extraction et le transfert de signaux, par exemple dans un équipement de type OADM (Optical Add/Drop Multiplexer) ou Multiplexeur à Insertion/Extraction. Par exemple, les coupleurs 303 pourront être des diviseurs de puissance à base de fibres optiques et présentant une entrée et deux sorties et tels que 90% de la puissance des signaux reçus sur la voie d'entrée soient transférée à la voie de transfert 302 et que 10% de cette puissance soit extraite sur la sortie d'extraction et transmise vers la voie d'extraction 304.

Sur la figure 3 sont également représentés plusieurs démultiplexeurs accordables 306. La sortie d'extraction d'un coupleur 303 est reliée par une voie d'extraction 304 correspondante, par exemple une fibre optique monomode, à l'entrée d'un démultiplexeur 306 correspondant. Ainsi, si une voie d'entrée 301 reçoit plusieurs signaux optiques à des canaux de longueur d'onde, une partie de la puissance de chacun de ces signaux à ces longueur d'onde sera reçue à l'entrée du démultiplexeur 306 correspondant, via la sortie d'extraction du coupleur 303 et la voie d'extraction 304 correspondantes.

Dans un mode préféré de l'invention, les démultiplexeurs accordables 306 sont de type WSS (Wavelength Selective Switch). Des démultiplexeurs accordables WSS et leur application comme commutateurs à sélection de longueurs d'ondes sont décrits, entre autres, dans US-A-2002/1 96520, WO-A-2004/015469 et S. MECHELS et al., IEEE Communication Magazine, mars 2003, pp 88-94.

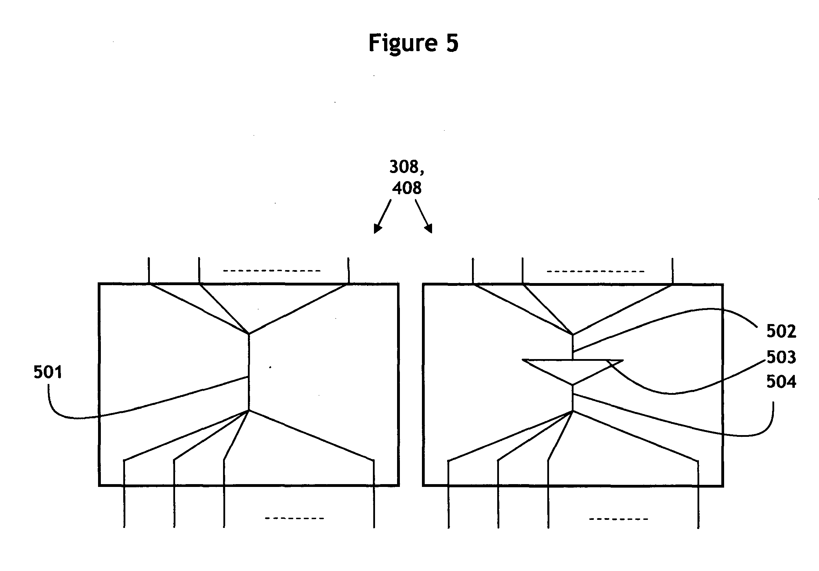

Les sorties des démultiplexeurs WSS sont reliées par des premiers liens optiques 307 à des entrées de coupleurs en étoile 308 présentant n entrées et m sorties. La puissance d'un signal reçu sur chacune des n entrées d'un coupleur 308 est répartie sur les m voies de sorties de ce coupleur. Cette répartition est essentiellement la même quel que soit le canal de longueur d'onde associé au signal. Dans un mode de réalisation préféré, un coupleur n x m réparti uniformément, dans les tolérances de fabrication, la puissance d'un signal reçu sur une quelconque de ses n entrées vers chacune de ses m sorties. Ainsi si un signal est reçu à un canal de longueur d'onde λ1 à une entrée d'un coupleur 308, une fraction approximativement égale de ce signal se retrouve sur chacune des sorties du coupleur 308. Les coupleurs en étoiles 308 peuvent de plus consister en des coupleurs passifs ou des coupleurs amplifiés comme il sera expliqué plus loin en relation avec la figure 5.

Chacune des sorties d'un coupleur en étoile 308 est reliées par un deuxième lien optique 309, par exemple une fibre optique monomode, à un récepteur accordable 311 correspondant. Un tel récepteur accordable peut être réalisé de plusieurs façons connues de l'homme de l'art. Par exemple un récepteur accordable 311 peut consister en un filtre accordable de canaux de longueur d'onde, par exemple à base de réseaux de Bragg, placé devant une photodiode Positif-Intrinsèque-Négatif (PIN). Un autre exemple de réalisation peut consister à utiliser un récepteur accordable de type cohérent constitué d'un oscillateur optique local et d'un mélangeur pour recevoir sur des photodiodes, par exemple de type PIN, des battements entre le signal de l'oscillateur local et les signaux présents sur une sortie du coupleur en étoile 308. D'autres types de récepteurs accordables sont possibles.

Sur la figure 3 est également représenté une unité de commande 312 permettant de régler par un lien de commande 313 les démultiplexeurs accordables 306.

Dans le mode de réalisation présenté sur la figure 3, le nombre de coupleurs en étoiles 308 n'est pas nécessairement égal au nombre de démultiplexeurs 306. L'homme de l'art est capable de choisir le nombre de coupleurs en étoiles 308 suffisant, compte tenu du nombre de sorties de démultiplexeurs 306 à relier, du nombre de récepteurs accordables 311 nécessaires, et des valeurs des paramètres n et m des coupleurs en étoile 308 utilisés.

L'ensemble constitué des démultiplexeurs accordables 306, des liens 307 et 309, des coupleurs en étoile 308, des récepteurs accordables 311, de l'unité de commande 312 et du lien de commande 313 constituent un module d'extraction 305. Ce module d'extraction 305 peut être utilisé dans un dispositif tel que montré sur la figure 1, pour réaliser le module d'extraction 105, ou dans d'autres types de noeuds de commutation optiques.

Le dispositif représenté sur la figure 3 possède une propriété connue sous le nom général de « directionless » en anglais, et signifiant que les récepteurs 311 ne sont pas affectés de façon fixe à recevoir des signaux de certaines entrées 301 particulières. Au contraire tous les récepteurs 311 sur la figure 3 permettent de recevoir des signaux sur des canaux de longueurs d'ondes reçus par n'importe laquelle des voies d'entrées 301. En effet, si un signal à un canal de longueur d'onde est reçu par une voie d'entrée 301, le démultiplexeur 306 correspondant à cette voie peut être réglé par l'unité de commande 312 et le lien 313 de manière à aiguiller ce signal vers une de ses sorties couplée à un quelconque des coupleurs en étoile, et ainsi atteindre n'importe lequel des récepteurs accordables 311 reliés à des sorties de ce coupleur en étoile. L'utilisation d'un récepteur accordable 311 permet de filtrer un signal sur un seul canal parmi plusieurs signaux à des canaux de longueur d'onde présents sur la sorties du coupleur en étoile correspondant.

Le dispositif présenté sur la figure 3 possède également la propriété connue d'être « colourless » comme décrit en anglais. Cela signifie que chaque détecteur 311 peut recevoir des signaux à des canaux différents en fonction des canaux reçus sur les voies d'entrée 301 et du réglage du démultiplexeur WSS situé entre ce récepteur et la voie d'entrée correspondante.

Le dispositif présenté sur la figure 3 permet de résoudre au moins partiellement la contention des canaux de longueurs d'onde. En effet, si deux signaux sont reçus simultanément sur le même canal de longueur d'onde sur deux entrées 301, et donc par les deux démultiplexeurs 306 correspondants, l'unité de commande 312 peut régler par le lien 313 ces deux démultiplexeurs de manière à ce que ces deux signaux soient reçus par deux coupleur en étoile 308 différents et parviennent ainsi à deux récepteurs 301 différents sans collision entre ces deux signaux.

Selon le dimensionnement du dispositif, la contention en longueur d'onde n'est pas forcément résolue dans tous les cas par le dispositif de la figure 3. Ainsi, et à titre d'exemple non limitatif, si le dispositif présente 32 entrées 301, et que ces 32 entrées reçoivent à un instant des signaux à un même canal de longueur d'onde, et que de plus, le nombre de coupleurs en étoile 308 est inférieur à 32, il est clair que la contention ne pourra pas être totalement résolue à cet instant là.

Une mise en oeuvre préférée du dispositif de la figure 3 est au contraire celle où le nombre de coupleurs en étoile 308 n'est pas inférieur au nombre de voies d'entrées 301. A titre d'exemple, ici aussi non limitatif, une mise en oeuvre avantageuse de la figure 3 pourra utiliser 4 voies d'entrées 301, chacune pouvant recevoir jusqu'à 80 signaux à 80 canaux de longueur d'ondes d'un spectre WDM sur une grille de 50GHz. On pourra utiliser quatre démultiplexeur accordables 306, par exemple des démultiplexeurs WSS, possédant une entrée et 9 sorties, 8 de ces sorties étant reliées à 8 coupleurs en étoile 308, de type 4 x 9 (par exemple à base de fibres optiques) et 72 récepteurs accordables 311 (par exemple des récepteurs cohérents). Pour ce type de valeurs, il sera le plus souvent possible de recevoir simultanément sur des récepteurs 301 des signaux à des longueurs d'onde identiques reçus par des voies d'entrée 301 différentes.

On peut donc dimensionner le dispositif de la figure 3 de manière à ce que la contention en longueur d'onde soit résolue statistiquement à certains instants, ou la plupart du temps ou systématiquement si on utilise un dimensionnement opportun des éléments de la figure 3. En particulier, dans le dispositif de la figure 3, le nombre total de récepteurs accordables peut être dimensionné en fonction de la capacité d'extraction requise, c'est-à-dire du nombre maximal de signaux devant être extraits simultanément au niveau du module d'extraction 305. Par ailleurs, le nombre de coupleurs en étoile 308 limite le nombre de signaux pouvant être reçus simultanément sur le même canal de longueur d'onde. Ainsi, si le dispositif de la figure 3 utilise 4 coupleurs en étoile, et sous réserve de la présence des autres éléments nécessaires sur la figure 3, quatre signaux à la même longueur d'onde issus de quatre voies d'entrées différentes pourront être détectés simultanément. Un mode de réalisation avantageux présente donc un nombre de coupleurs en étoile supérieur ou égal au nombre des voies d'entrées. Par ailleurs, le niveau minimal du rapport signal sur bruit optique devant être obtenu au niveau des récepteurs accordables peut aussi être pris en compte pour dimensionner ce nombre de coupleurs en étoile. En effet, ce rapport tend généralement à diminuer à mesure que le nombre de canaux de longueurs d'onde combinés dans un même coupleur augmente ou quand le nombre de ports de coupleurs étoile augmente.

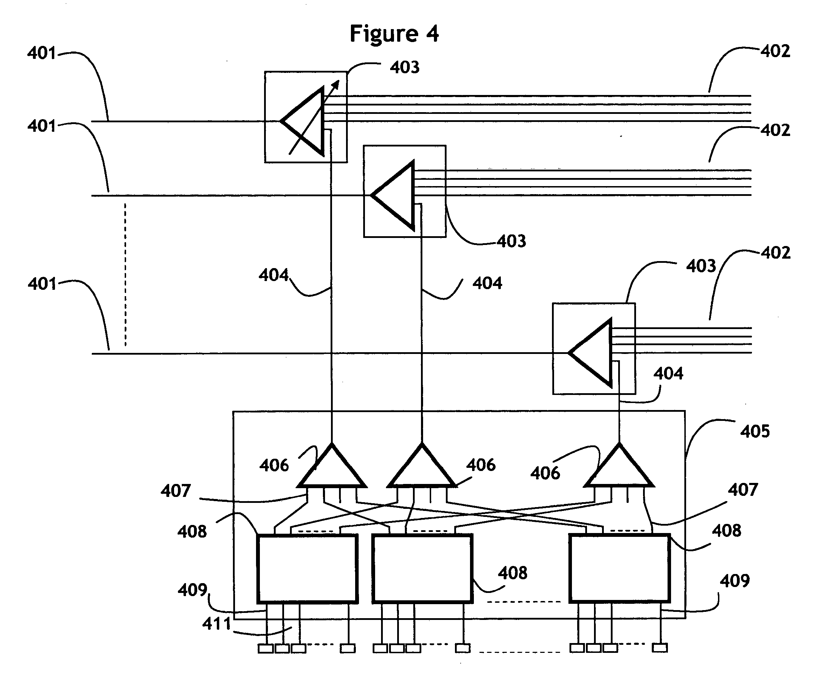

La figure 4 illustre un deuxième mode de réalisation d'un dispositif d'extraction qui présente l'avantage additionnel de réduire le coût de fabrication, comme il va être expliqué. Un tel dispositif d'extraction peut être utilisé dans un réseau optique, notamment dans un dispositif de commutation de signaux optique présentant une architecture de type sélection/combinaison.

Sur la figure 4 les éléments analogues ou identiques à ceux de la figure 2 portent le même chiffre de référence augmenté de 200.

Sur la figure 4 les éléments analogues ou identiques à ceux de la figure 3 portent aussi le même chiffre de référence augmenté de 100.

Sur la figure 4, on a représenté schématiquement une pluralité de voies d'entrées 401, par exemple des fibres optiques monomodes. Ces voies d'entrées sont capables de recevoir des signaux optiques à des canaux de longueurs d'ondes.

Des coupleurs de transfert et d'extraction 403 sont positionnés sur chacune des voies d'entrées 401. Ces coupleurs 403 sont sur la figure 4 des démultiplexeurs accordables, par exemple des WSS, dont une sortie peut être reliée à une voie d'extraction 404 et d'autres sorties reliées à des voies de transfert 402. Ces démultiplexeurs accordables 404 peuvent être avantageusement ceux habituellement présents sur les voies d'entrées d'un multiplexeur optique à insertion / extraction, comme par exemple indiqué plus haut en relation avec la figure 2.

Sur la figure 4 sont également représentés plusieurs démultiplexeurs fixes 406. Dans le mode de réalisation présenté, ces démultiplexeurs fixes peuvent être des démultiplexeurs de bandes ou des démultiplexeurs périodiques. On connait des démultiplexeur de bandes capables de séparer sur une même sortie des signaux à des groupes de canaux adjacents d'une grille de longueur d'onde. Ces démultiplexeurs peuvent être réalisés par exemple à l'aide de filtres optiques passe bande de type multicouches diélectriques. On connait également des démultiplexeurs périodiques, par exemple en silice sur silicium de type à réseaux de guides (AWG pour Array Waveguide Gratting, en anglais). Ces démultiplexeurs périodiques permettent d'extraire sur chacune de leurs sorties des signaux à des canaux de longueurs d'ondes espacés d'un multiple du pas d'une grille de longueur d'onde, ce facteur de multiplicité correspondant à la périodicité du démultiplexeur. Ces démultiplexeurs périodiques peuvent par exemple être réalisés en silice sur silicium ou en matériau semi-conducteur de type GaInAsP/InP.

La sortie d'extraction d'un démultiplexeur accordable 403, par exemple un WSS, est reliée par une voie d'extraction 404 correspondante, par exemple une fibre optique monomode, à l'entrée d'un démultiplexeur fixe 406 correspondant, de type démultiplexeur de bandes ou démultiplexeur périodique. Ainsi, si une voie d'entrée 401 reçoit plusieurs signaux optiques à des canaux de longueurs d'onde, une partie de la puissance de certains de ces signaux à des longueurs d'onde peut être reçue à l'entrée du démultiplexeur fixe 406 correspondant, via la sortie d'extraction du démultiplexeur accordable 403 et la voie d'extraction 404 correspondantes.

Les sorties des démultiplexeurs fixes 406 sont reliées par des premiers liens optiques 407 à des entrées de coupleurs en étoile 408 présentant n entrées et m sorties. Ces coupleurs en étoiles 408 peuvent être de type passifs ou de type amplifié, comme il sera expliqué plus loin en relation avec la figure 5.

Chacune des sorties d'un coupleur en étoile 408 est reliée par un deuxième lien optique 409, par exemple une fibre optique monomode, à un récepteur accordable 411 correspondant.

Il convient de noter que comme pour le mode de réalisation de la figure 3, le nombre de coupleurs en étoiles 408 n'est pas nécessairement égal au nombre de démultiplexeurs 406. L'homme de l'art est capable de choisir le nombre de coupleurs en étoiles 408 suffisant, compte tenu du nombre de sorties de démultiplexeurs 406 à relier, du nombre de récepteurs accordables 411 nécessaires, et des valeurs des paramètres n et m des coupleurs en étoile 408 utilisés.

L'ensemble constitué des démultiplexeurs fixes 406, des liens 407 et 409, des coupleurs en étoile 408, des récepteurs accordables 411, constituent un module d'extraction 405. Ce module d'extraction 405 peut être utilisé dans un dispositif tel que montré sur la figure 2, pour réaliser le module d'extraction 205.

Le dispositif de la figure 4 présente aussi la caractéristique d'être « directionless ». En effet, pour autant qu'un coupleur en étoile 408 est relié à tous les démultiplexeurs fixes 406, tout récepteur 411 relié à une sortie de ce coupleur en étoile 408 peut recevoir un signal de l'une quelconque des voies d'entrées 401. Ce signal sera transmis, via le démultiplexeur accordable 403, la voie d'extraction 404 et le démultiplexeur fixe 406 correspondants. Toutefois, du fait de la fixité des démultiplexeurs 406, ce signal ne pourra être reçu que sur certains canaux de longueurs d'onde pour chaque voie d'entrée donnée. La propriété « directionless » est donc réalisée avec une moindre flexibilité par le dispositif selon la figure 4.

De la même manière, la propriété « colourless » est réalisée avec une moindre flexibilité par le dispositif selon la figure 4. En effet, un récepteur accordable 411 ne peut recevoir des signaux d'une voie d'entrée donnée que sur des canaux de longueurs d'ondes pour lesquels le démultiplexeur fixe 406 associé à cette voie d'entrée est passant en direction du coupleur en étoile 408 auquel ce récepteur est relié.

Toutefois, le dispositif de la figure 4 permet de réduire significativement le coût d'implémentation par rapport au dispositif de la figure 3. En effet, sur la figure 4, le démultiplexeur accordable 403 n'est pas nécessairement spécifique à la fonction d'extraction en question. Au contraire ce démultiplexeur accordable peut remplir conjointement une fonction de sélection des signaux à transférer, notamment dans un dispositif de commutation ayant une architecture sélection/combinaison comme sur la figure 2.

D'autre part, un démultiplexeur fixe 406 est de coût significativement inférieur au coût d'un démultiplexeur accordable comme utilisé au chiffre 306 sur la figure 3.

Les dispositifs des figures 3 et 4 présentent donc l'avantage de résoudre de façon statistique ou systématique la contention en longueur d'onde. Le dispositif de la figure 4 permet de plus un compromis permettant une réduction du coût de réalisation, au dépend de la flexibilité des propriétés « directionless » et « colourless », comme expliqué précédemment.

La figure 5 représente deux variantes de réalisation d'un coupleur en étoile, à n entrées et m sorties, et pouvant être utilisées pour réaliser les coupleurs en étoile 308 ou 408 dans les dispositifs des figures 3 et 4. On a représenté en 501 la section de couplage d'un coupleur en étoile de type coupleur passif présentant plusieurs entrées et plusieurs sorties. Un tel coupleur peut être réalisé au moyen de technologies connues à base de fibres optiques monomodes, de guides en silice sur silicium et d'autres technologies encore. Comme le reconnaîtra l'homme de l'art, les pertes d'insertion d'un tel coupleur sont essentiellement dépendantes du nombre de d'entrées et de sorties de ces coupleurs.

Le choix du nombre n d'entrées et du nombre m de sorties des coupleurs en étoiles 308, 408 dépend du nombre de voies d'entrées 301, 401, du nombre signaux sur de mêmes canaux pouvant être extraits simultanément, et d'autres paramètres encore. Or, il est connu que les pertes d'insertion des coupleurs en étoile n x m sont proportionnelles au logarithme du maximum entre m et n. En conséquence, du fait des pertes d'insertion entre les voies d'entrées 301, 401 et les récepteurs 311, 411, et notamment celles dues à la présence des coupleurs en étoile 308, 408, la puissance du signal reçu par chaque récepteur 311, 411 peut être très faible. Ces pertes d'insertion sont essentiellement constituées de la somme des pertes d'insertion du coupleur de transfert et d'extraction 303, 403, du démultiplexeur 306, 406 et du coupleur en étoile 308, 408, et d'autres pertes encore. Les dispositifs décrits sur les figures 3 et 4 peuvent donc utiliser avantageusement le coupleur en étoile de type coupleur actif représenté schématiquement sur la figure 5 en 502, 503 et 504. Au chiffre 503 est représenté un élément amplificateur optique inséré entre un coupleur n x 1 au chiffre 502 et un diviseur 1x m au chiffre 504. Le coupleur 503 ou le diviseur 504 peuvent être réalisés dans des technologies connues à base de fibres optiques monomodes ou de silice sur silicium ou en semi-conducteur GaInAsP/InP ou d'autres technologies. L'élément amplificateur peut être un étage de gain localisé réalisé par une fibre dopée à l'erbium et pompée optiquement, ou un amplificateur semi-conducteur de type GaInAsP/InP ou d'autres types d'amplificateurs encore, y compris des technologies d'amplification répartie. Par exemple, le coupleur n x 1 au chiffre 502, la section de couplage au chiffre 503 et le diviseur 1 x m au chiffre 504 pourraient être réalisés à base de fibres optiques monomodes dopées à l'erbium et pompées optiquement, réalisant ainsi une structure à amplification répartie.

Dans une variante particulière non représentée de la figure 3, aucune voie de transfert 302 n'est prévue. Dans ce cas, la totalité de la puissance des signaux reçue par une voie d'entrée d'un coupleur 303 est transmise sur la voie d'extraction 304 correspondante. Cette variante particulière peut être réalisée avec un coupleur 303 qui se réduit alors à un dispositif à une entrée et une sortie, par exemple à un tronçon de fibre optique monomode. Un tel mode de réalisation peut être utile pour extraire des signaux au niveau d'un noeud situé à l'extrémité d'une branche du réseau, par exemple dans un réseau optique passif.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs unités ou modules peuvent être représentés par un même élément matériel.

Dans les revendications, tout chiffre de référence entre parenthèses ne saurait être interprété comme une limitation de la revendication.

## Revendications

1. Dispositif d'extraction multivoies de canaux WDM comportant :
une pluralité de voies d'entrées (301, 401) capables de recevoir des canaux WDM,
un premier démultiplexeur (306, 406) dont une entrée est reliée à une première desdites voies d'entrée,
un deuxième démultiplexeur (306, 406) dont une entrée est reliée à une deuxième desdites voies d'entrée,
un premier coupleur en étoile (308, 408), possédant une pluralité d'entrées, une première entrée dudit premier coupleur en étoile étant reliée à une première sortie dudit premier démultiplexeur, et une deuxième entrée dudit premier coupleur en étoile étant reliée à une première sortie dudit deuxième démultiplexeur,
un deuxième coupleur en étoile (308, 408) possédant une pluralité d'entrées, une première entrée dudit deuxième coupleur en étoile étant reliée à une deuxième sortie dudit premier démultiplexeur, et une deuxième entrée dudit deuxième coupleur en étoile étant reliée à une deuxième sortie dudit deuxième démultiplexeur,
et une pluralité de récepteurs accordables (311, 411), un premier des récepteurs accordables (311, 411) étant relié à une première sortie dudit premier coupleur en étoile, un deuxième des récepteurs accordables (311,411) étant relié à une deuxième sortie dudit premier coupleur en étoile, et un troisième des récepteurs accordables (311, 411) étant relié à une sortie dudit deuxième coupleur en étoile,
**caractérisé par le fait qu'**il comporte un premier coupleur d'extraction (303, 403) situé sur la première voie d'entrée et un deuxième coupleur d'extraction (303, 403), situé sur la deuxième voie d'entrée,
le premier coupleur d'extraction comportant une unique sortie d'extraction, la sortie d'extraction dudit premier coupleur d'extraction étant reliée à l'entrée du premier démultiplexeur (306, 406),
le deuxième coupleur d'extraction comportant une unique sortie d'extraction, la sortie d'extraction dudit deuxième coupleur d'extraction étant reliée à l'entrée du deuxième démultiplexeur (306, 406).

2. Dispositif d'extraction selon la revendication 1, **caractérisé par le fait que** lesdits démultiplexeurs comportent des démultiplexeurs accordables de type WSS (306).

3. Dispositif d'extraction selon la revendication 2, dans lequel lesdits démultiplexeurs accordables de type WSS (306) sont réglés de manière que lesdites première et deuxième entrées dudit premier coupleur en étoile ne puissent recevoir simultanément des signaux sur un même canal de longueur d'onde extraits de ladite première voie d'entrée et de ladite deuxième voie d'entrée.

4. Dispositif d'extraction selon l'une des revendications 1 à 3, **caractérisé par le fait que** lesdits coupleurs d'extraction comportent des diviseurs de puissance (303) présentant ladite sortie d'extraction et une sortie de transfert.

5. Dispositif d'extraction selon la revendication 1, **caractérisé par le fait que** lesdits coupleurs d'extraction comportent des démultiplexeurs accordables de type WSS (403) possédant une entrée reliée à une dite voie d'entrée, ladite sortie d'extraction et une sortie de transfert et que lesdits démultiplexeurs comportent des démultiplexeurs fixes (406).

6. Dispositif d'extraction selon la revendication 5, **caractérisé par le fait que** les démultiplexeurs fixes (406) comportent des démultiplexeurs périodiques ou des démultiplexeurs de bandes de longueurs d'ondes.

7. Dispositif d'extraction selon l'une des revendications 5 et 6, **caractérisé par le fait que** lesdits démultiplexeurs fixes sont agencés et reliés audit premier coupleur en étoile de manière que lesdites première et deuxième entrées dudit premier coupleur en étoile ne puissent recevoir simultanément des signaux sur un même canal de longueur d'onde extraits de ladite première voie d'entrée et de la dite deuxième voie d'entrée.

8. Dispositif d'extraction selon l'une des revendications 1 à 7, **caractérisé par le fait que** lesdits coupleurs en étoile comportent des coupleurs passifs (501).

9. Dispositif d'extraction optique multivoies selon l'une des revendications 1 à 7, **caractérisé par le fait que** lesdits coupleurs en étoile comportent des coupleurs amplifiés (502, 503, 504).

10. Dispositif d'extraction selon l'une des revendications 1 à 9, **caractérisé par le fait que** lesdits récepteurs accordables comportent des récepteurs cohérents (311, 411) reliés directement aux sorties des coupleurs en étoile par des liens optiques (309, 409).

## Patentansprüche

1. Vorrichtung zum Mehrwege-Abzweigen von WDM-Kanälen, umfassend:
Eine Vielzahl von Eingangspfaden (301, 401), welche fähig sind, WDM-Kanäle zu empfangen,
einen ersten Demultiplexer (306, 406), dessen einer Eingang mit einem ersten der besagten Eingangspfade verbunden ist,
einen zweiten Demultiplexer (306, 406), dessen einer Eingang mit einem zweiten der besagten Eingangspfade verbunden ist,
einen ersten Sternkoppler (308, 408) mit einer Vielzahl von Eingängen, wobei ein erster Eingang des besagten Sternkopplers mit einem ersten Ausgang des besagten ersten Demultiplexers verbunden ist und ein zweiter Eingang des besagten Sternkopplers mit einem ersten Ausgang des besagten zweiten Demultiplexers verbunden ist,
einen zweiten Sternkoppler (308, 408) mit einer Vielzahl von Eingängen, wobei ein erster Eingang des besagten zweiten Sternkopplers mit einem zweiten Ausgang des besagten ersten Demultiplexers verbunden ist, und ein zweiter Eingang des besagten zweiten Sternkopplers mit einem zweiten Ausgang des besagten zweiten Demultiplexers verbunden ist,
und eine Vielzahl von abstimmbaren Empfängern (311, 411), wobei ein erster der abstimmbaren Empfänger (311, 411) mit einem ersten Ausgang des besagten ersten Sternkopplers verbunden ist, ein zweiter der abstimmbaren Empfänger (311, 411) mit einem zweiten Ausgang des besagten ersten Sternkopplers verbunden ist, und ein dritter der abstimmbaren Empfänger (311, 411) mit einem Ausgang des besagten zweiten Sternkopplers verbunden ist,
**dadurch gekennzeichnet, dass** sie einen ersten Abzweigkoppler (303, 403), welcher auf dem ersten Eingangspfad angeordnet ist, und einen zweiten Abzweigkoppler (303, 403), welcher auf dem zweiten Eingangspfad angeordnet ist, umfasst,
wobei der erste Abzweigkoppler einen einzigen Abzweigausgang umfasst, wobei der Abzweigausgang des besagten ersten Abzweigkopplers mit dem Eingang des ersten Demultiplexers (306, 406) verbunden ist,
wobei der zweite Abzweigkoppler einen einzigen Abzweigausgang umfasst, wobei der Abzweigausgang des besagten zweiten Abzweigkopplers mit dem Eingang des zweiten Demultiplexers (306, 406) verbunden ist.

2. Abzweigungsvorrichtung nach Anspruch 1, **dadurch gekennzeichnet, dass** die besagten Demultiplexer abstimmbare Demultiplexer vom Typ WSS (306) umfassen.

3. Abzweigungsvorrichtung nach Anspruch 2, wobei die besagten abstimmbaren Demultiplexer vom Typ WSS (306) derart eingestellt sind, dass der besagte erste und der besagte zweite Eingang des besagten ersten Sternkopplers aus dem besagten ersten Eingangspfad und aus dem besagten zweiten Eingangspfad abgezweigte Signale nicht simultan auf einem selben Wellenlängenkanal empfangen können.

4. Abzweigungsvorrichtung nach einem der Ansprüche 1 bis 3, **dadurch gekennzeichnet, dass** die besagten Abzweigkoppler Leistungsteiler (303) umfassen, welche den besagten Abzweigausgang und einen Übertragungsausgang aufweisen.

5. Abzweigungsvorrichtung nach Anspruch 1, **dadurch gekennzeichnet, dass** die besagten Abzweigkoppler abstimmbare Demultiplexer vom Typ WSS (403) mit einem Eingang, welcher mit einem besagten Eingangspfad verbunden ist, dem besagten Abzweigausgang und einem Übertragungsausgang umfassen, und dass die besagten Demultiplexer fest eingestellte Demultiplexer (406) umfassen.

6. Abzweigungsvorrichtung nach Anspruch 5, **dadurch gekennzeichnet, dass** die fest eingestellten Demultiplexer (406) periodische Demultiplexer oder Wellenlängenbanddemultiplexer umfassen.

7. Abzweigungsvorrichtung nach einem der Ansprüche 5 und 6, **dadurch gekennzeichnet, dass** die besagten fest eingestellten Demultiplexer derart ausgelegt und mit dem besagten ersten Sternkoppler verbunden sind, dass der besagte erste und der besagte zweite Eingang des besagten ersten Stenkopplers aus dem besagten ersten Eingangspfad und aus dem besagten zweiten Eingangspfad abgezweigte Signale nicht simultan auf einem selben Wellenlängenkanal empfangen können.

8. Abzweigungsvorrichtung nach einem der Ansprüche 1 bis 7, **dadurch gekennzeichnet, dass** die besagten Sternkoppler passive Koppler (501) umfassen.

9. Vorrichtung zum optischen Mehrwege-Abzweigen von WDM-Kanälen nach einem der Ansprüche 1 bis 7, **dadurch gekennzeichnet, dass** die besagten Sternkoppler verstärkte Kuppler (502, 503, 504) umfassen.

10. Abzweigungsvorrichtung nach einem der Ansprüche 1 bis 9, **dadurch gekennzeichnet, dass** die besagten abstimmbaren Empfänger kohärente Empfänger (311, 411) umfassen, welche über optische Verbindungen (309, 409) direkt mit den Ausgängen der Sternkoppler verbunden sind.

## Claims

1. A multi-channel extraction device for WDM channels comprising:
a plurality of input channels (301, 401) capable of receiving WDM channels, a first demultiplexer (306, 406) whose input is connected to a first one of said input channels,
a second demultiplexer (306, 406) of which one input is connected to a second one of said input channels,
a first star coupler (308, 408), possessing a plurality of inputs, a first input of said first star coupler being connected to a first output of said first demultiplexer, and a second input of said first star coupler being connected to a first output of said second demultiplexer, a second star coupler (308, 408) possessing a plurality of inputs, a first input of said second star coupler being connected to a second output of said first demultiplexer, and a second input of said second star coupler being connected to a second output of said second demultiplexer, and a plurality of tunable receivers (311, 411), a first one of the tunable receivers (311, 411) being connected to a first output of said first star coupler, a second one of the tunable receivers (311.411) being connected to a second output of said first star coupler, and a third of the tunable receivers (311, 411) being connected to an output of said second star coupler,
**characterized by** the fact that it comprises a first extraction coupler (303, 403) located on the first input channel and a second extraction coupler (303, 403), located on the second input channel,
the first extraction coupler comprising a single extraction output, the extraction output of said first extraction coupler being connected to the input of the first demultiplexer (306, 406),
the second extraction coupler comprising a single extraction output, the extraction output of said second extraction coupler being connected to the input of the second demultiplexer (306, 406).

2. An extraction device according to claims 1, **characterized by** the fact that said demultiplexers comprise WSS tunable demultiplexers (306).

3. An extraction device according to claim 2, wherein said WSS tunable demultiplexers (306) are adjusted such that said first and second inputs of said first star coupler cannot simultaneously receive signals on the same wavelength channel that were extracted from said first input channel and said second input channel.

4. An extraction device according to one of the claims 1 to 3, **characterized by** the fact that said extraction couples comprise power splitters (303) featuring said extraction output and a transfer output.

5. An extraction device according to claim 1, **characterized by** the fact that said extraction couplers comprise WSS tunable demultiplexers (403) possessing an input connected to a said input channel, said extraction output and a transfer output and that said demultiplexers comprise fixed demultiplexers (406).

6. An extraction device according to claims 5, **characterized by** the fact that the fixed demultiplexers (406) comprise periodic demultiplexers or wavelength band demultiplexers.

7. An extraction device according to one of the claims 5 and 6, **characterized by** the fact that said fixed demultiplexers are operative and connected to said first star coupler so that said first and second inputs of said first star coupler cannot simultaneously receive signals on the same wavelength channel that were extracted from said first input channel and from said second input channel.

8. An extraction device according to one of the claims 1 to 7, **characterized by** the fact that said star couplers comprise passive couplers (501).

9. An optical multichannel extraction device according to one of the claims 1 to 7, **characterized by** the fact that said star couplers comprise amplified couplers (502, 503, 504).

10. An extraction device according to one of the claims 1 to 9, **characterized by** the fact that said tunable receivers comprise coherent receivers (311, 411) directly connected to the outputs of the star couplers by optical links (309, 409).
